# EUROPEAN PATENT APPLICATION

(11) **EP 2 319 698 A1**
(43) Date of publication of application: **11.05.2011**
(21) Application number: 09838291.4
(22) Date of filing: 14.01.2009
(51) Int. Cl.: B41J 2/52, H04N 1/46, H04N 1/60

(54) **PROGRAM, IMAGE FORMING METHOD, AND PRINTING SYSTEM**

(71) Applicant: Mimaki Engineering Co., Ltd., Tomi-shi, Nagano 389-0512 (JP)
(72) Inventor: IKEDA, Natsumi, Tomi-city Nagano 389-0512 (JP)
(74) Representative: Gendron, Vincent Christian
(86) International application number: PCT/JP2009/050381
(87) International publication number: WO 2010/082321

(57) **Abstract**

In a plurality of inkjet printers, variation of color reproduction characteristic of each of the inkjet printers is reduced appropriately.

In a program for making a computer execute an image formation processing, an output image creation processing (S54) is executed by the computer so that output image data are created on the basis of printing data. A plurality of the printing apparatuses perform printing of the same image on the basis of output image data adjusted depending on color reproduction characteristic of each of the printing apparatuses. The output image creation processing (S54) includes a rasterize processing (S62), an apparatus common color conversion processing (S64) in which color conversion common to a plurality of the printing apparatuses is executed by using one ICC profile, and an each apparatus adjustment processing (S66) in which adjustment for reducing variation of color reproduction characteristic in each of a plurality of the printing apparatuses is executed by using calibration information prepared for each of the printing apparatuses.

## Description

### [Technical Field]

The present invention relates to a program, an image forming method and a printing system.

### [Background Art]

Conventionally, a method where distributed printing is performed by using a plurality of printing apparatuses has been known. For example, a plurality of inkjet printers having the same specification is used as the printing apparatus.

### [Disclosure of the Invention]

### [Technical Problem]

When a plurality of printing apparatuses is used, color difference may occur in each of the printing apparatuses to cause variation of color reproduction characteristic. Therefore, in this case, for example, variation of color reproduction characteristic of each printing apparatus is required to restrain by an appropriate method.

In order to restrain the variation of color reproduction characteristic of each printing apparatus, various methods have been conventionally proposed for restraining an individual difference of printing result of each printing apparatus (see, for example, Patent Literatures 1 , 2 and 3). For example, in the structure disclosed in Patent Literature 1, a plurality of color conversion informations corresponding to respective inkjet printers are respectively created and color conversion tables corresponding to the respective color conversion informations are transmitted to a plurality of printers which are specified depending on the operating conditions.

When printing by an inkjet printer is to be performed, an image formation processing such as an RIP processing is normally executed. Further, in recent years, a processing amount in an image formation processing has increased due to improvement of printing resolution.

In such circumstances, in addition to a normal image formation processing, for example, in a case that a processing for restraining an individual difference of printing result of each printing apparatus is to be performed, when a load of the processing for restraining the individual difference of printing result is large, a required processing amount is largely increased and a time required for completion of image formation processing is increased. As a result, it may be difficult that the image formation processing is executed at a high speed.

Therefore, conventionally, for example, it is required that variation of color reproduction characteristic of each printing apparatus is restrained by a further appropriate method. In view of the problem described above, an objective of the present invention is to provide a program, an image forming method and a printing system which are capable of solving the problems.
- [Patent Literature 1]:: Japanese Patent Laid-Open No. 2004-46339
- [Patent Literature 2]:: Japanese Patent Laid-Open No. 2004-234391
- [Patent Literature 3]:: Japanese Patent Laid-Open No. 2007-137013

### [Solution to Problem]

In order to attain the above-mentioned objective, the present invention provides the following structures.

### (Structure 1)

A program with which computer executes an image formation processing in which output image data are formed, the output image data being data representing image to be printed by a plurality of printing apparatuses which perform printing in an inkjet method,
wherein the computer executes;
a printing data acquisition processing in which printing data are acquired, the printing data representing the image with a color of a color system that is not dependent on color reproduction characteristic of ink used in the printing apparatus; and
an output image creation processing in which the printing data are converted to the output image data representing the image with a color depending on color reproduction characteristic of ink used in the printing apparatus to create the output image data; and
a data output processing in which the output image data having been created are outputted to the plurality of the printing apparatuses;
wherein the output image creation processing comprises;
   a rasterize processing in which the image represented by the printing data is rasterized according to resolution of the printing apparatus;
   an apparatus common color conversion processing in which one ICC profile common to the plurality of the printing apparatuses is used to execute common color conversion for the plurality of the printing apparatuses; and
   an each apparatus adjustment processing in which adjustment for reducing variation of color reproduction characteristic of each of the plurality of the printing apparatuses is executed by using calibration information which is prepared for each of the printing apparatuses depending on the color reproduction characteristic of each of the printing apparatuses to create the output image data having been adjusted depending on the color reproduction characteristic of each of the printing apparatuses; and
wherein the plurality of the printing apparatuses print a same image on a basis of the output image data having been adjusted depending on the color reproduction characteristic of each of the printing apparatuses.

The program is provided in a recorded state on a recording medium such as a CD-ROM and installed in a computer. The computer is, for example, a host computer which controls an operation of an inkjet printer. The computer is, for example, provided on the outside of the inkjet printer.

The output image creation processing is, for example, an RIP (Raster Image Processor) processing in which output image data are formed on the basis of printing data. The output image creation processing may further execute other processing in the RIP processing. For example, the output image creation processing may further execute a rendering processing or the like.

Further, each of a plurality of printing apparatuses is, for example, an inkjet printer which is used in a printing system performing distributed printing. It is preferable that a plurality of the printing apparatuses is, for example, an inkjet printer having the same specification. Further, a plurality of printing apparatuses performs printing, for example, by using the same ink. The ink is, for example, ink for color printing such as inks of respective colors in CMYK inks. The CMYK inks are, for example, inks of respective colors of "C" (cyan), "M" (Magenta), "Y" (yellow) and "K" (black).

In this case, when there is variation of color reproduction characteristic in each of the printing apparatuses, a finish state of a printed matter may be different in each of the printing apparatuses. Further, as a result, it is difficult to perform distributed printing appropriately. On the other hand, according to the above-mentioned structure, color difference due to machine difference and the like in a plurality of the printing apparatuses can be absorbed and variation of color reproduction characteristic can be reduced appropriately. Further, as a result, for example, distributed printing can be performed appropriately.

Further, in the structure described above, since a processing using one ICC profile common to a plurality of the printing apparatuses is separated from a processing using calibration information prepared for each of the printing apparatuses, a processing except an each apparatus adjustment processing, for example, a rasterize processing and an apparatus common color conversion processing can be appropriately made common for a plurality of the printing apparatuses. Therefore, according to this structure, the image formation processing can be appropriately executed at a high speed.

Further, in the structure described above, for example, different from a case that an ICC profile is individually prepared for each of the printing apparatuses, only one common ICC profile may be prepared for a plurality of the printing apparatuses. Therefore, according to this structure, for example, work man-hours required to prepare the ICC profile can be reduced remarkably.

Preparation of an ICC profile may require a working time, for example, more than one day through one week or more. Therefore, in order to individually prepare an ICC profile for each printing apparatus, work man-hours are increased largely and thus working efficiency is remarkably reduced and cost is increased.

In accordance with an embodiment of the present invention, an each apparatus adjustment processing replaces, for example, color of data before or after or the like of conversion by the apparatus common color conversion processing with color having a value after correction by the calibration information. According to this structure, correction corresponding to color reproduction characteristic of each of the printing apparatuses can be executed appropriately.

For example, information may be used as the calibration information which corrects one of values of device depending color and device independent color in the ICC profile. In this case, the calibration information makes, for example, a value of the device depending color or the device independent color in the ICC profile correspond to a value corrected depending on color reproduction characteristic of the corresponding printing apparatus. For example, the calibration information makes a value of the device depending color in the ICC profile correspond to a value of the device depending color after correction. The calibration information may make a value of the device independent color in the ICC profile correspond to a value of the device independent color after correction.

Further, when the each apparatus adjustment processing is a processing which is to be executed before the apparatus common color conversion processing, for example, the each apparatus adjustment processing executes adjustment for reducing variation of color reproduction characteristic for data created in a rasterize processing which is executed before the apparatus common color conversion processing. In this case, for example, the calibration information makes a value of the device depending color used in the data created in the rasterize processing correspond to a value after correction.

The calibration information described above can be, for example, easily and appropriately prepared with reduced man-hours in comparison with an ICC profile. For example, the calibration information described above can be prepared for a time of several minutes to about several tens of minutes. Therefore, according to this structure, man-hours required to prepare data necessary for color conversion can be reduced appropriately. Further, according to this structure, variation of color reproduction characteristic of each of the printing apparatuses can be reduced further appropriately.

In addition, since the calibration information is easily prepared, adjustment and re-preparation of the calibration information can be appropriately executed as needed. For example, different from a case that adjustment and re-preparation of an ICC profile itself are executed, a user for the printing apparatus is capable of preparing the calibration information or the like for oneself. Further, for example, the calibration information can be newly prepared before starting of daily working or the like. Therefore, according to this structure, for example, the variation of the color reproduction characteristic of each of the printing apparatuses can be further flexibly reduced.

### (Structure 2)

The computer further executes;
a color chart printing execution processing in which a color chart that is previously set is printed by the plurality of the printing apparatuses;
a color measurement result acquisition processing in which the color chart having been printed is measured with a colorimeter to acquire a color measurement result with respect to a printing result of each of the plurality of the printing apparatuses; and a calibration information creation processing in which calibration informations respectively corresponding to the plurality of the printing apparatuses are created on the basis of the color measurement results corresponded to the respective printing apparatuses. The colorimeter is, for example, provided on the outside of the computer.

According to this structure, for example, the calibration information corresponding to color reproduction characteristic of each of the printing apparatuses can be created appropriately. Therefore, for example, variation of color reproduction characteristic of each of the printing apparatuses can be reduced appropriately.

### (Structure 3)

The output image creation processing is an RIP (Raster Image Processor) processing which forms the output image data on the basis of the printing data,
the color which is used in the printing data is device depending color which is dependent on color reproduction characteristic of a predetermined device,
the apparatus common color conversion processing includes;
a first common color conversion processing which is a color conversion processing using a first ICC profile that is common to the plurality of the printing apparatuses and in which the device depending color used in the printing data is converted into device independent color, and
a second common color conversion processing which is a color conversion processing using a second ICC profile that is common to the plurality of the printing apparatuses and in which the device independent color after conversion by the first common color conversion processing is converted into device depending color which is dependent on color reproduction characteristic of the ink,
each of the printing apparatuses is provided with inkjet heads from which at least inks of respective colors of CMYK inks are ejected,
the each apparatus adjustment processing is a processing which is executed after the second common color conversion processing,
the calibration information is information which makes colors of CMYK color system correspond to colors of CMYK color system and
the colors of CMYK color system in the ICC profile which is used in the second common color conversion processing are corresponded to colors which have been corrected for the respective printing apparatuses.

According to this structure, for example, the each apparatus adjustment processing can be executed appropriately and efficiently. Further, according to this structure, variation of color reproduction characteristic of each of the printing apparatuses can be reduced further appropriately.

### (Structure 4)

The output image creation processing is an RIP (Raster Image Processor) processing which forms the output image data on the basis of the printing data,
the color which is used in the printing data is device depending color which is dependent on color reproduction characteristic of a predetermined device,
the apparatus common color conversion processing includes;
a first common color conversion processing which is a color conversion processing using a first ICC profile that is common to the plurality of the printing apparatuses and in which the device depending color used in the printing data is converted into device independent color, and
a second common color conversion processing which is a color conversion processing using a second ICC profile that is common to the plurality of the printing apparatuses and in which the device independent color after conversion by the first common color conversion processing is converted into device depending color which is dependent on color reproduction characteristic of the ink,
the each apparatus adjustment processing is a processing which is executed before the first common color conversion processing,
the calibration information is information for correcting the device depending color which is used in the printing data and the device depending color before execution of the first common color conversion processing is corresponded to color which has been corrected for each of the printing apparatuses.

According to this structure, for example, the each apparatus adjustment processing can be executed appropriately and efficiently. Further, according to this structure, variation of color reproduction characteristic of each of the printing apparatuses can be reduced further appropriately.

### (Structure 5)

The output image creation processing is an RIP (Raster Image Processor) processing which forms the output image data on the basis of the printing data,
the color which is used in the printing data is device depending color which is dependent on color reproduction characteristic of a predetermined device,
the apparatus common color conversion processing includes;
a first common color conversion processing which is a color conversion processing using a first ICC profile that is common to the plurality of the printing apparatuses and in which the device depending color used in the printing data is converted into device independent color, and
a second common color conversion processing which is a color conversion processing using a second ICC profile that is common to the plurality of the printing apparatuses and in which the device independent color after conversion by the first common color conversion processing is converted into device depending color which is dependent on color reproduction characteristic of the ink,
the each apparatus adjustment processing is a processing which is executed after the first common color conversion processing and before the second common color conversion processing,
the calibration information is information for correcting the device independent color after conversion by the first common color conversion processing and the device independent color after conversion by the first common color conversion processing is corresponded to color which has been corrected for each of the printing apparatuses.

According to this structure, for example, the each apparatus adjustment processing can be executed appropriately and efficiently. Further, according to this structure, variation of color reproduction characteristic of each of the printing apparatuses can be reduced further appropriately.

In the structures 3 through 5 described above, the device independent color in the first and the second ICC profiles is, for example, a color expressed by the "Lab" color system. As the device independent color, a color expressed by the "XYZ" color system may be used. Further, the device depending color in the second ICC profile is, for example, a color expressed by the "CMYK" color system.

Further, in the output image creation processing, the each apparatus adjustment processing may be executed plural times. For example, in the output image creation processing, the each apparatus adjustment processing may be executed twice or three times by combining two or three of the above-mentioned structures 3 through 5.

### (Structure 6)

An image forming method for forming output image data which represents image to be printed by a plurality of printing apparatuses which perform printing in an inkjet method, the image forming method comprising:
a printing data acquisition step in which printing data are acquired, the printing data representing the image with a color of a color system that is not dependent on color reproduction characteristic of ink used in the printing apparatus;
an output image creation step in which the printing data are converted to the output image data representing the image with a color depending on color reproduction characteristic of ink used in the printing apparatus to create the output image data; and
a data output step in which the output image data having been created are outputted to the plurality of the printing apparatuses;
wherein the output image creation step comprises;
a rasterize step in which the image represented by the printing data is rasterized according to resolution of the printing apparatus;
an apparatus common color conversion step in which one ICC profile common to the plurality of the printing apparatuses is used to execute common color conversion for the plurality of the printing apparatuses; and
an each apparatus adjustment step in which adjustment for reducing variation of color reproduction characteristic in each of the plurality of the printing apparatuses is executed by using calibration information which is prepared for each of the printing apparatuses depending on the color reproduction characteristic of each of the printing apparatuses to create the output image data having been adjusted depending on the color reproduction characteristic of each of the printing apparatuses; and
wherein the plurality of the printing apparatuses perform printing of the same image on the basis of the output image data having been adjusted depending on the color reproduction characteristic of each of the printing apparatuses.
According to this method, for example, similar effects to the above-mentioned structure 1 can be obtained.

### (Structure 7)

A printing system comprising:
a plurality of printing apparatuses which perform printing in an inkjet method; and
an image forming device for executing an image formation processing which forms output image data representing image to be printed by the printing apparatus; wherein the image forming device comprises;
   a printing data acquisition processing section in which printing data are acquired, the printing data representing the image with a color of a color system that is not dependent on color reproduction characteristic of ink used in the printing apparatus;
   an output image creation processing section in which the printing data are converted to the output image data representing the image with a color depending on color reproduction characteristic of ink used in the printing apparatus to create the output image data; and
   a data output processing section in which the output image data having been created are outputted to the plurality of the printing apparatuses;
   wherein the output image creation processing section comprises;
   a rasterize processing section in which the image represented by the printing data is rasterized according to resolution of the printing apparatus;
   an apparatus common color conversion processing section in which one ICC profile common to the plurality of the printing apparatuses is used to execute common color conversion for the plurality of the printing apparatuses; and
   an each apparatus adjustment processing section in which adjustment for reducing variation of color reproduction characteristic in each of the plurality of the printing apparatuses is executed by using calibration information which is prepared for each of the printing apparatuses depending on the color reproduction characteristic of each of the printing apparatuses to create the output image data having been adjusted depending on the color reproduction characteristic of each of the printing apparatuses;
wherein the plurality of the printing apparatuses perform printing of the same image on the basis of the output image data having been adjusted depending on the color reproduction characteristic of each of the printing apparatuses According to this system, for example, similar effects to the above-mentioned structure 1 can be obtained.

The image forming device is, for example, a computer which is provided on the outside of the inkjet printer. The computer operates as an image forming device, for example, according to a predetermined program. In this case, for example, a CPU of the computer operates as respective sections of the image forming device according to the program. Further, the image forming device may be structured of a plurality of computers.

### [Advantageous Effects of Invention]

According to the present invention, for example, variation of color reproduction characteristic of each of a plurality of the printing apparatuses can be reduced appropriately.

### [Description of Embodiments]

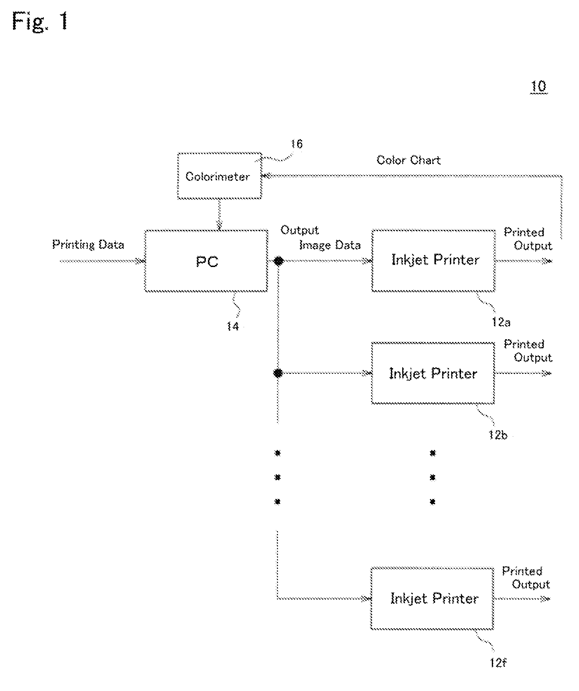

An embodiment of the present invention will be described below with reference to the accompanying drawings. Fig. 1 is a view showing a structure of a printing system 10 which uses a program in accordance with an embodiment of the present invention. The printing system 10 is a printing system for performing distributed printing by using a plurality of printing apparatuses and is provided with a plurality of inkjet printers 12a through 12f, a colorimeter 16 and a PC 14.

Each of a plurality of the inkjet printers 12a through 12f is a printing apparatus for distributed printing, which is provided with inkjet heads from which inks of respective colors of CMYK inks are ejected. Further, in this embodiment, the inkjet printers 12a through 12f perform printing in a multi-pass system through scanning operations where inkjet heads are reciprocated in a predetermined scanning direction. When distributed printing is to be executed, the inkjet printers 12a through 12f receive output image data adjusted depending on color reproduction characteristics of the respective inkjet printers 12a through 12f from the PC 14 to perform printing of the same image on the basis of the received output image data. The output image data are output data of image formation processing executed in the PC 14.

Further, for example, in a case that creation of calibration information which is used for adjustment of color reproducibility is executed or the like, the inkjet printers 12a through 12f respectively print preset color charts according to instructions of the PC 14. The calibration information is, for example, information which is used for adjustment of color conversion in an image formation processing.

A plurality of the inkjet printers 12a through 12f is, for example, an inkjet printer having the same specification and printing is performed by using the same ink. The inks are those for color printing such as inks for respective colors of CMYK inks.

The colorimeter 16 is, for example, a colorimeter which is the same as or similar to a well-known colorimeter. In this embodiment, the colorimeter 16 is provided on an outer side of the inkjet printers 12a through 12f and performs color measurement of color charts which are respectively printed by the inkjet printers 12a through 12f.

The PC 14 is a host computer which is provided on an outside of the inkjet printers 12a through 12f and operates as an image formation device in the printing system 10 according to a program which has been previously installed. In accordance with an embodiment, the image forming device of the printing system 10 may be structured of a computer, a database provided on an outside of the computer, and the like. Further, the image forming device may be structured of a plurality of computers.

In this embodiment, the PC 14 stores ICC profiles corresponding to device characteristics of the inkjet printers 12a through 12f and executes an image formation processing on the basis of the ICC profile according to a program. In this embodiment, the image formation processing is an "RIP" processing. Further, in the image formation processing, the PC 14 forms output image data which are transferred to the inkjet printers 12a through 12f. In the image formation processing, the PC 14 receives printing data such as a post script file or a PDF file from the outside to form output image data corresponding to the printing data.

The image formation processing in the PC 14 will be described further in detail below. The PC 14 may form output image data on the basis of printing data prepared by using an application program on the PC 14.

Further, in this embodiment, the PC 14 acquires color measurement results of the colorimeter 16 and creates calibration information on the basis of the color measurement results. An operation for creating the calibration information will be described in detail below.

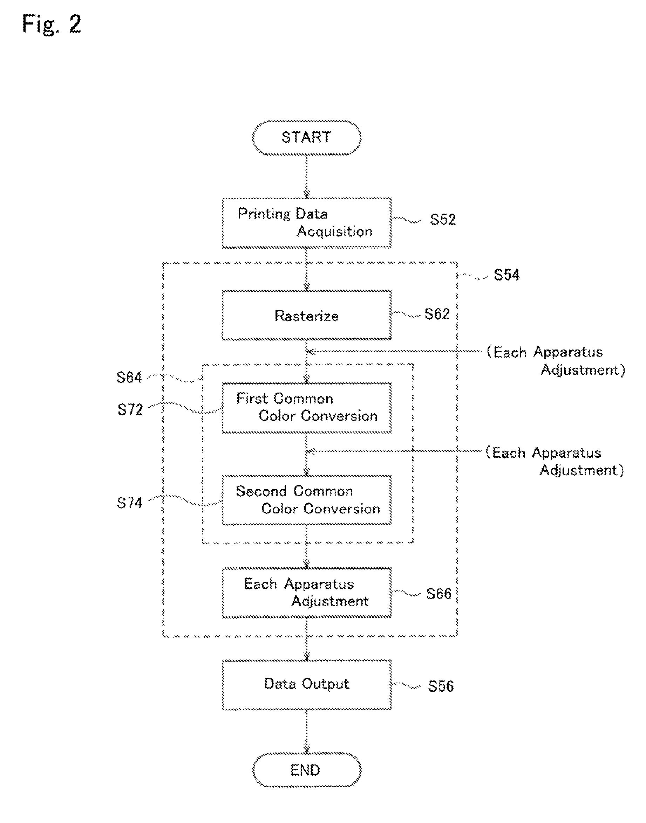

Next, an operation of the PC 14 will be described further in detail below. First, an operation of an image formation processing is described. Fig. 2 is a flow chart showing an example of an operation of the image formation processing in the PC 14. The PC 14 executes the following operation, for example, according to a program having been installed in advance.

First, the PC 14 acquires printing data, for example, from the outside computer or from an application program executed in the PC 14 (printing data acquisition processing S52). The printing data are, for example, a post script file or a PDF file and an image to be printed is shown by colors of a color system independent to the color reproduction characteristics of inks which are used in the inkjet printers 12a through 12f. In this embodiment, the color of the color system is, for example, a color of an RGB color system or the like. The device depending color may be a device depending color which is dependent on the color reproduction characteristic of a device on a side for preparing printing data.

Next, the PC 14 converts the printing data into output image data to create the output image data (output image creation processing S54). In this embodiment, the output image creation processing S54 is an RIP processing in which output image data showing image with colors of CMYK color system are created on the basis of the printing data. The colors of the CMYK color system are, for example, colors depending on color reproduction characteristics of CMYK inks which are used in the inkjet printers 12a through 12f. Further, the output image data are data, for example, including developed raster image data and commands which are capable of being interpreted by the inkjet printers 12a through 12f. The output image data may be data showing an image with a printer description language.

In the output image creation processing S54, first, the PC 14 performs rasterization of the image which is shown by the printing data according to the resolutions of the inkjet printers 12a through 12f (rasterize processing S62). Next, color conversion is executed for a plurality of the inkjet printers 12a through 12f by using a common ICC profile (apparatus common color conversion processing S64).

Further, in the apparatus common color conversion processing S64 in this embodiment, the PC 14 executes two times of color conversion (first common color conversion processing S72 and second common color conversion processing S74). In the first common color conversion processing S72, the PC 14 executes color conversion with the use of the first ICC profile common to a plurality of the inkjet printers 12a through 12f and the device depending color which is used in the printing data is converted into a device independent color. The first ICC profile is, for example, an ICC profile in which a color expressed by the RGB color system is corresponded to a color expressed by the Lab color system.

Further, after the first common color conversion processing S72, in the second common color conversion processing S74, the PC 14 executes color conversion with the use of the second ICC profile common to a plurality of the inkjet printers 12a through 12f and the converted device independent color by the first common color conversion processing is converted into a device depending color which is dependent upon the color reproduction characteristic of ink. The second ICC profile is, for example, an ICC profile in which a color expressed by the Lab color system is corresponded to a color expressed by the CMYK color system.

In this manner, the PC 14 executes color matching common to a plurality of the inkjet printers 12a through 12f. In accordance with an embodiment of the present invention, the PC 14 may further execute another processing common to a plurality of the inkjet printers 12a through 12f before or after the rasterize processing S62 or the apparatus common color conversion processing S64. For example, the PC 14 may further execute a rendering processing and the like.

Next, the PC 14 executes an individual adjustment of color conversion for each of the inkjet printers 12a through 12f (each apparatus adjustment processing S66). In the each apparatus adjustment processing S66, the PC 14 executes adjustment for reducing variation of the color reproduction characteristic in each of a plurality of the inkjet printers 12a through 12f by using calibration information prepared for each of the inkjet printers 12a through 12f. In this manner, the PC 14 creates output image data which are adjusted depending on the color reproduction characteristic of each of the inkjet printers 12a through 12f as output image data which are sent to each of the inkjet printers 12a through 12f.

In this embodiment, the calibration information is, for example, information which makes a color of the CMYK color system correspond to a color of the CMYK color system and the color of the CMYK color system in the ICC profile used in the second common color conversion processing S74 is corresponded to a color which has been executed with correction for each of the inkjet printers 12a through 12f. Further, the calibration information is, for example, prepared for each of the inkjet printers 12a through 12f depending on the color reproduction characteristics of each of the inkjet printers 12a through 12f.

As described above, the PC 14 executes the RIP processing based on the printing data to create output image data. Next, the PC 14 outputs the created output image data to the inkjet printer 12 (data output processing S56). In this manner, the PC 14 makes the inkjet printer 12 execute a printing operation.

According to this embodiment, for example, color difference occurred due to individual difference in a plurality of the inkjet printers 12a through 12f can be absorbed appropriately. Therefore, for example, variation of the color reproduction characteristic of each of the inkjet printers 12a through 12f can be reduced appropriately. In addition, since variation of color reproduction characteristic is reduced, for example, distributed printing can be performed appropriately.

Further, since the processing using the ICC profile common to a plurality of the inkjet printers 12a through 12f is separated from the processing using the calibration information prepared for each of the inkjet printers 12a through 12f, for example, the processing except the each apparatus adjustment processing can be appropriately made common for a plurality of the inkjet printers 12a through 12f. Therefore, according to this embodiment, for example, the image formation processing can be appropriately executed at a high speed.

In addition, in this embodiment, for example, different from a case that an ICC profile is separately prepared for each of the inkjet printers 12a through 12f, only the common ICC profile is prepared for a plurality of the inkjet printers 12a through 12f. Therefore, according to this embodiment, for example, work man-hours required to prepare the ICC profile can be reduced remarkably.

In accordance with an embodiment of the present invention, the PC 14 may execute the each apparatus adjustment processing at a timing different from the above-mentioned embodiment. For example, the PC 14 may execute the each apparatus adjustment processing before the first common color conversion processing S72. In this case, in the each apparatus adjustment processing, color correction is executed on the data created by the rasterize processing S62. Further, for example, information for correcting the device depending color which is used in the printing data is used as the calibration information. The calibration information makes, for example, the device depending color, which is used in the data before the first common color conversion processing is executed, correspond to the color in which correction for each of the inkjet printers 12a through 12f has been executed.

Further, the PC 14 may execute the each apparatus adjustment processing after the first common color conversion processing S72 and before the second common color conversion processing S74. In this case, as the calibration information, for example, information is used which corrects the device independent color after converted by the first common color conversion processing. The calibration information makes, for example, the device independent color after converted by the first common color conversion processing S72 correspond to the color in which correction for each of the inkjet printers 12a through 12f has been executed.

Further, the PC 14 may, for example, execute the each apparatus adjustment processing at a plurality of timings. For example, the each apparatus adjustment processing may be executed at two or more timings among a timing before the first common color conversion processing S72, a timing after the first common color conversion processing S72, and a timing after the second common color conversion processing S74. In this case, the PC 14 executes the respective each apparatus adjustment processings by using the calibration information corresponding to the respective timings.

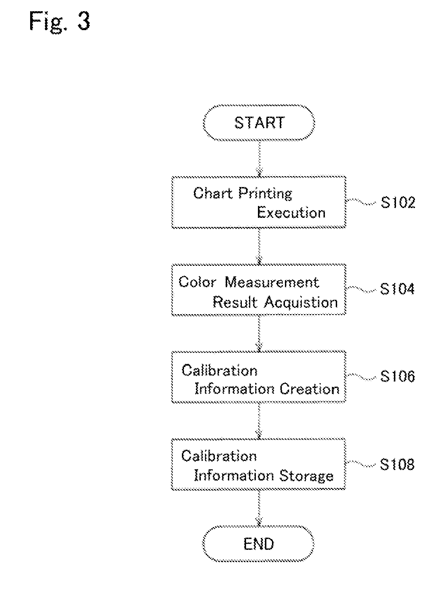

Next, an operation for creating the calibration information will be described blow. Fig. 3 is a flow chart showing an operation for creating the calibration information. The PC 14 executes the following operation, for example, according to a program having been installed in advance.

First, the PC 14 makes a plurality of the inkjet printers 12a through 12f execute printing of color charts (color chart printing execution processing S102). In this processing, the PC 14 sends, for example, common output image data representing a color chart to each of a plurality of the inkjet printers 12a through 12f to perform printing the same color chart. The color chart is, for example, a color chart including primary colors and patches of high order colors.

Next, after the colorimeter 16 has executed color measurement for the printed color chart which had been printed by each of the inkjet printers 12a through 12f, the PC 14 acquires color measurement results of the colorimeter 16 (color measurement result acquisition processing S104). In this manner, the PC 14 acquires a color measurement result for the printing result of each of a plurality of the inkjet printers 12a through 12f.

Next, the PC 14 creates a plurality of calibration informations respectively corresponding to a plurality of the inkjet printers 12a through 12f on the basis of the acquired color measurement results (calibration information creation processing S106). In this processing, the PC 14 calculates, for example, a color reproduction characteristic of each of the inkjet printers 12a through 12f on the basis of the color measurement results. Next, calibration information for reducing variation of the color reproduction characteristic is created on the basis of the calculated color reproduction characteristic. The variation of the color reproduction characteristic is, for example, the variation of the color reproduction characteristic which is occurred when color conversion is executed by using only the common ICC profile.

After the calibration information creation processing S106, the PC 14 stores a plurality of calibration informations having been created, for example, to a storage device such as an HDD of the PC 14 (calibration information storage processing S108). In this processing, the PC 14 stores a plurality of the calibration informations so as to correspond to one ICC profile.

According to this embodiment, for example, the calibration information corresponding to the color reproduction characteristic of each of the inkjet printers 12a through 12f can be created appropriately. Further, in this manner, for example, the variation of the color reproduction characteristic of each of the inkjet printers 12a through 12f can be reduced appropriately.

Further, the above-mentioned calibration information can be, for example, easily and appropriately prepared with reduced man-hours in comparison with an ICC profile. Therefore, in addition, according to this embodiment, the variation of the color reproduction characteristic of each of the inkjet printers 12a through 12f can be reduced appropriately without requiring a lot of man-hours for preparation of the data required for color conversion.

Further, since the calibration information is easily prepared, adjustment and re-preparation of the calibration information can be appropriately executed as needed. For example, different from a case that adjustment and re-preparation of an ICC profile itself are executed, a user for the inkjet printers 12a through 12f is capable of preparing the calibration information for oneself. Further, for example, the calibration information can be newly prepared before starting of daily working. Therefore, according to this structure, for example, the variation of the color reproduction characteristic of each of the inkjet printers 12a through 12f can be further flexibly executed.

In the calibration information creation processing S106, the PC 14 creates, for example, the calibration information by comparing the color chart printed by each of the inkjet printers 12a through 12f with a reference color chart having been prepared previously. The reference color chart is, for example, a color chart which has been printed by one of the inkjet printers 12a through 12f. As the color chart, for example, a color chart printed by one of the inkjet printers 12a through 12f prior to delivery from a factory, a color chart printed by one of the inkjet printers 12a through 12f at a specified date or the like may be used.

Further, in the calibration information creation processing S106, for example, with the color reproduction characteristic of one of the inkjet printers 12a through 12f as a reference, the PC 14 makes match the color reproduction characteristic of the other of the inkjet printers 12a through 12f to the reference. As the reference of the inkjet printers 12a through 12f, for example, one of the inkjet printers 12a through 12f whose performance of the color reproduction characteristic is the lowest may be used. According to this structure, the color reproduction characteristics of the other of the inkjet printers 12a through 12f can be matched with the reference appropriately.

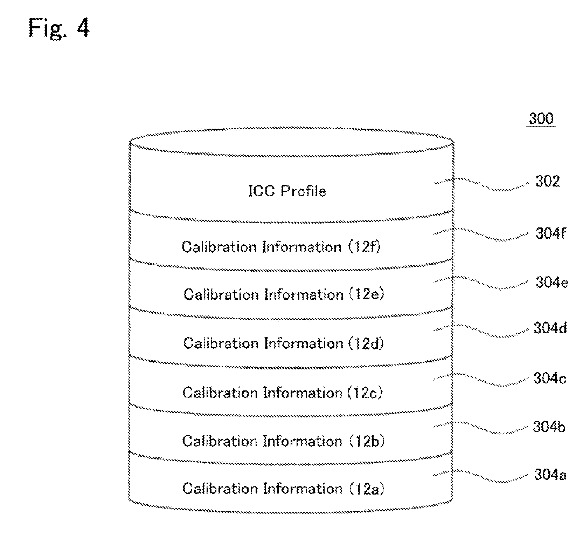

Fig. 4 is a view showing a structure of an ICC profile 302 and a plurality of calibration informations 304a through 304f. In this embodiment, the PC 14 stores the ICC profile 302 and a plurality of the calibration informations 304a through 304f within one color conversion information file 300. In this manner, the PC 14 collectively stores the ICC profile 302 common to a plurality of the inkjet printers 12a through 12f and a plurality of the calibration informations 304a through 304f corresponding to a plurality of the inkjet printers 12a through 12f within a single file. According to this embodiment, for example, the ICC profile 302 and the calibration informations 304a through 304f are managed and utilized appropriately.

Although the present invention has been shown and described with reference to a specific embodiment, the technical scope of the present invention is not limited to the embodiment described above. Various changes and modifications will be apparent to those skilled in the art from the teachings herein. It is clear from the description of the following claims that embodiments to which the various changes and modifications are applied are included in the technical scope of the present invention.

### [Industrial Applicability]

The present invention may be, for example, preferably utilized in a printing system.

### [Brief Description of Drawings]

[Fig. 1]
   Fig. 1 is a view showing an example of a structure of a printing system 10 which uses a program in accordance with an embodiment of the present invention.
[Fig. 2]
   Fig. 2 is a flow chart showing an example of an operation of an image formation processing in PC 14.
[Fig. 3]
   Fig. 3 is a flow chart showing an example of an operation for creating calibration information.
[Fig. 4]
   Fig. 4 is a view showing an example of a structure of an ICC profile 302 and a plurality of calibration informations 304a through 304f.

### [Reference Signs List]

10 ... printing system, 12a through 12f ... inkjet printer, 14 ... PC, 16 ... colorimeter, 300 ... color conversion information file, 302 ... ICC profile, 304a, 304b, 304c, 304d, 304e, 304f ... calibration information

## Claims

1. A program with which computer executes an image formation processing in which output image data are formed, the output image data being data representing image to be printed by a plurality of printing apparatuses which perform printing in an inkjet method,
wherein the computer executes;
a printing data acquisition processing in which printing data are acquired, the printing data representing the image with a color of a color system that is not dependent on color reproduction characteristic of ink used in the printing apparatus;
an output image creation processing in which the printing data are converted to the output image data representing the image with a color depending on color reproduction characteristic of ink used in the printing apparatus to create the output image data; and
a data output processing in which the output image data having been created are outputted to the plurality of the printing apparatuses;
wherein the output image creation processing comprises;
a rasterize processing in which the image represented by the printing data is rasterized according to resolution of the printing apparatus;
an apparatus common color conversion processing in which one ICC profile common to the plurality of the printing apparatuses is used to execute common color conversion for the plurality of the printing apparatuses; and
an each apparatus adjustment processing in which adjustment for reducing variation of color reproduction characteristic of each of the plurality of the printing apparatuses is executed by using calibration information which is prepared for each of the printing apparatuses depending on the color reproduction characteristic of each of the printing apparatuses to create the output image data having been adjusted depending on the color reproduction characteristic of each of the printing apparatuses; and
wherein the plurality of the printing apparatuses print same image on a basis of the output image data having been adjusted depending on the color reproduction characteristic of each of the printing apparatuses.

2. The program according to claim 1, wherein the computer further executes;
a color chart printing execution processing in which a color chart that is previously set is printed by the plurality of the printing apparatuses;
a color measurement result acquisition processing in which the color chart having been printed is measured with a colorimeter to acquire a color measurement result with respect to a printing result of each of the plurality of the printing apparatuses; and
a calibration information creation processing in which the calibration information corresponding to each of the plurality of the printing apparatuses is created on a basis of the color measurement result corresponded to each of the printing apparatuses.

3. The program according to claim 1 or 2, wherein
the output image creation processing is an RIP (Raster Image Processor) processing which forms the output image data on the basis of the printing data,
the color which is used in the printing data is device depending color which is dependent on color reproduction characteristic of a predetermined device,
the apparatus common color conversion processing includes;
a first common color conversion processing which is a color conversion processing using a first ICC profile that is common to the plurality of the printing apparatuses and in which the device depending color used in the printing data is converted into device independent color, and
a second common color conversion processing which is a color conversion processing using a second ICC profile that is common to the plurality of the printing apparatuses and in which the device independent color after conversion by the first common color conversion processing is converted into device depending color which is dependent on color reproduction characteristic of the ink,
each of the printing apparatuses is provided with inkjet heads from which at least inks of respective colors of CMYK inks are ejected,
the each apparatus adjustment processing is a processing which is executed after the second common color conversion processing,
the calibration information is information which makes colors of CMYK color system correspond to colors of CMYK color system, and
the colors of CMYK color system in the ICC profile which is used in the second common color conversion processing are corresponded to colors which have been corrected for the respective printing apparatuses.

4. The program according to one of claims 1 through 3, wherein
the output image creation processing is an RIP (Raster Image Processor) processing which forms the output image data on the basis of the printing data,
the color which is used in the printing data is device depending color which is dependent on color reproduction characteristic of a predetermined device,
the apparatus common color conversion processing includes;
a first common color conversion processing which is a color conversion processing using a first ICC profile that is common to the plurality of the printing apparatuses and in which the device depending color used in the printing data is converted into device independent color, and
a second common color conversion processing which is a color conversion processing using a second ICC profile that is common to the plurality of the printing apparatuses and in which the device independent color after conversion by the first common color conversion processing is converted into device depending color which is dependent on color reproduction characteristic of the ink,
the each apparatus adjustment processing is a processing which is executed before the first common color conversion processing,
the calibration information is information for correcting the device depending color which is used in the printing data and the device depending color before execution of the first common color conversion processing is corresponded to color which has been corrected for each of the printing apparatuses.

5. The program according to one of claims 1 through 4, wherein
the output image creation processing is an RIP (Raster Image Processor) processing which forms the output image data on the basis of the printing data,
the color which is used in the printing data is device depending color which is dependent on color reproduction characteristic of a predetermined device,
the apparatus common color conversion processing includes;
a first common color conversion processing which is a color conversion processing using a first ICC profile that is common to the plurality of the printing apparatuses and in which the device depending color used in the printing data is converted into device independent color, and
a second common color conversion processing which is a color conversion processing using a second ICC profile that is common to the plurality of the printing apparatuses and in which the device independent color after conversion by the first common color conversion processing is converted into device depending color which is dependent on color reproduction characteristic of the ink,
the each apparatus adjustment processing is a processing which is executed after the first common color conversion processing and before the second common color conversion processing,
the calibration information is information for correcting the device independent color after conversion by the first common color conversion processing and the device independent color after conversion by the first common color conversion processing is corresponded to color which has been corrected for each of the printing apparatuses.

6. An image forming method for forming output image data which represents image to be printed by a plurality of printing apparatuses which perform printing in an inkjet method, the image forming method comprising:
a printing data acquisition step in which printing data are acquired, the printing data representing the image with a color of a color system that is not dependent on color reproduction characteristic of ink used in the printing apparatus;
an output image creation step in which the printing data are converted to the output image data representing the image with a color depending on color reproduction characteristic of ink used in the printing apparatus to create the output image data; and
a data output step in which the output image data having been created are outputted to the plurality of the printing apparatuses;
wherein the output image creation step comprises;
a rasterize step in which the image represented by the printing data is rasterized according to resolution of the printing apparatus;
an apparatus common color conversion step in which one ICC profile common to the plurality of the printing apparatuses is used to execute common color conversion for the plurality of the printing apparatuses; and
an each apparatus adjustment step in which adjustment for reducing variation of color reproduction characteristic in each of the plurality of the printing apparatuses is executed by using calibration information which is prepared for each of the printing apparatuses depending on the color reproduction characteristic of each of the printing apparatuses to create the output image data having been adjusted depending on the color reproduction characteristic of each of the printing apparatuses; and
wherein the plurality of the printing apparatuses perform printing of the same image on a basis of the output image data having been adjusted depending on the color reproduction characteristic of each of the printing apparatuses.

7. A printing system comprising:
a plurality of printing apparatuses which perform printing in an inkjet method; and
an image forming device for executing an image formation processing which forms output image data representing image to be printed by the printing apparatus;
wherein the image forming device comprises;
a printing data acquisition processing section in which printing data are acquired, the printing data representing the image with a color of a color system that is not dependent on color reproduction characteristic of ink used in the printing apparatus;
an output image creation processing section in which the printing data are converted to the output image data representing the image with a color depending on color reproduction characteristic of ink used in the printing apparatus to create the output image data; and
a data output processing section in which the output image data having been created are outputted to the plurality of the printing apparatuses;
wherein the output image creation processing section comprises;
a rasterize processing section in which the image represented by the printing data is rasterized according to resolution of the printing apparatus;
an apparatus common color conversion processing section in which one ICC profile common to the plurality of the printing apparatuses is used to execute common color conversion for the plurality of the printing apparatuses; and
an each apparatus adjustment processing section in which adjustment for reducing variation of color reproduction characteristic in each of the plurality of the printing apparatuses is executed by using calibration information which is prepared for each of the printing apparatuses depending on the color reproduction characteristic of each of the printing apparatuses to create the output image data having been adjusted depending on the color reproduction characteristic of each of the printing apparatuses;
wherein the plurality of the printing apparatuses perform printing of the same image on a basis of the output image data having been adjusted depending on the color reproduction characteristic of each of the printing apparatuses.
